# FASCICULE DE BREVET EUROPEEN

(11) **EP 1 508 484 B1**
(45) Date de publication et mention de la délivrance du brevet: **14.05.2008**
(21) Numéro de dépôt: 04300490.2
(22) Date de dépôt: 29.07.2004
(51) Int. Cl.: B60R 21/09

(54) **Pédalier de véhicule automobile et véhicule muni d'un tel pédalier**
Pedalwerk für ein Kraftfahrzeug und Kraftfahrzeug ausgerüstet mit einem solchen Pedalwerk
pedal arrangement for a vehicle and vehicle equipped with such a vehicle

(30) Priorité: 11.08.2003 FR 0309822
(43) Date de publication de la demande: 23.02.2005
(73) Titulaire: Peugeot Citroën Automobiles S.A., 78140 Vélizy Villacoublay (FR)
(72) Inventeur: COQUEL, Carole, 78500, SARTROUVILLE (FR); CASTILLO GONZALES, Jaime, 48920, PORTUGALETE VIZCAYA (ES); PRADERA ANGULO, Borja, 48001, BILBAO (ES)
(74) Mandataire: De Cuenca, Emmanuel Jaime

(56) Documents cités:
- EP-A- 1 253 051
- DE-A- 10 008 884
- US-B2- 6 571 659

## Description

La présente invention se rapporte à un pédalier de véhicule automobile et à un véhicule muni d'un tel pédalier.

L'invention concerne plus particulièrement un pédalier muni d'au moins deux pédales destinées aux commandes d'un système de freinage et de débrayage d'un moyen de transmission par exemple. Le pédalier est disposé dans l'habitacle d'un véhicule, par exemple au niveau d'un élément de structure transversale d'un véhicule automobile, de préférence sur un tablier disposé à l'avant de l'habitacle.

Il est ainsi connu dans l'art antérieur des dispositifs de sécurité active destinés à la mise au plancher d'une des pédales, le brevet EP 1 253 051 présentant un tel système. Comme présenté dans ce document, le pédalier comprend avantageusement un dispositif de sécurité passive composé d'un moyen de basculement apte à rendre mobile une pédale en cas de choc frontal.

Ainsi, lors d'un choc frontal, le moyen de basculement d'un tel pédalier rentre en contact avec une butée disposée de préférence sur la colonne de direction du véhicule. Le dispositif de sécurité passive adopte ainsi une cinématique de basculement provoquant une mise au plancher d'une pédale.

Ainsi, de manière à réduire l'agressivité donnée par la pédale au conducteur, il est connu que la rotation de la pédale s'effectue autour d'un axe de rotation différent de celui autour duquel elle pivote en fonctionnement normal d'utilisation.

Il est également connu que la rotation du moyen de basculement entraîne généralement une mise au plancher d'une pédale, le choix de la pédale s'effectuant de préférence par le niveau d'agressivité que génèrent les pédales au conducteur lors d'un choc du véhicule. Il est ainsi connu que le système de freinage assisté par un amplificateur de freinage relié à la pédale de freinage par une tige rigide transmet un effort important à la pédale, se traduisant par une remontée de la pédale dans l'habitacle, générant donc un niveau élevé d'agressivité envers le conducteur du véhicule. Par conséquent, dans l'art antérieur, la pédale de freinage est souvent associée à un dispositif de sécurité passive lui permettant une mise au plancher lors d'un choc de préférence frontal du véhicule.

La demanderesse a constaté que l'encombrement alloué à la fonction de mise au plancher d'au moins une pédale n'est généralement pas disponible sur des véhicules de dimension moyenne ou petite car incompatible avec le volume plus restreint de l'habitacle. Néanmoins, dans un souci d'amélioration de la sécurité et notamment celle du conducteur, il est connu des dispositifs de sécurité passive agissant principalement sur une pédale, de préférence la pédale de frein. Ainsi, il est connu des pédaliers munis de dispositifs de sécurité passive n'agissant que partiellement sur l'ensemble des pédales.

La demanderesse a également constaté que, lors d'un choc frontal du véhicule, certains dispositifs de sécurité passive comportent un moyen de désolidarisation destiné à libérer de manière quasi intégrale la liaison entre une pédale et un support du pédalier. L'inconvénient relevé de cette technologie réside dans la perte du contrôle du déplacement de la pédale lors d'un choc, lequel est souvent fonction de l'effort transmis par l'actionneur auquel la pédale est associée, par exemple un amplificateur de freinage pour la pédale de frein. Il est ainsi commun de constater une remontée de la pédale dans l'habitacle du véhicule car la liaison entre la pédale et l'actionneur reste continuellement effective tandis que la liaison entre la pédale et le support du pédalier est rompue.

Un but de la présente invention est de proposer un pédalier de véhicule automobile comprenant notamment une pédale de frein et une pédale de débrayage, le pédalier comportant un dispositif de sécurité passive destiné à mettre au plancher les deux pédales, et ce en simultanée, permettant de pallier tout ou partie des inconvénients de l'art antérieur relevés ci-dessus.

A cette fin, le pédalier selon l'invention, par ailleurs conforme à la définition générique qu'en donne le préambule ci-dessus, est essentiellement caractérisé en ce qu'il comporte un support mobile disposé entre deux flasques fixes et relié à la pédale de débrayage par un moyen de rotation, le support étant rendu mobile en rotation sur les flasques fixes par un moyen de renvoi d'efforts reliant entre eux les supports mobiles de sorte à provoquer la mise au plancher de la pédale de débrayage simultanément de la pédale de frein.

Par ailleurs, l'invention peut avantageusement se caractérisé en ce que le moyen de renvoi d'efforts, de forme sensiblement en L, comprend au moins deux extrémités, chacune des extrémités coopérant avec un moyen de liaison disposé sur un premier et un second support mobile. Ainsi, le moyen de liaison est de préférence soit un axe de rotation disposé dans une ouverture de la biellette, et dans une ouverture du premier support mobile, les ouvertures étant alors coaxiales, soit un axe de rotation faisant saillie hors des flancs de la biellette, l'axe de rotation étant alors disposé dans une ouverture du second support mobile.

De préférence, selon l'invention l'axe de rotation coopérant avec l'ouverture disposée dans la biellette est l'axe de rotation de la pédale de frein pour commander, en fonctionnement normal du pédalier, un système de freinage associé, l'axe de rotation et la pédale de frein étant conformés de sorte à former une pièce monobloc.

Selon l'invention, le support mobile destiné à la mise au plancher de la pédale de débrayage comprend avantageusement une ouverture dans laquelle est disposé l'axe de rotation de la biellette.

Par ailleurs, l'invention peut avantageusement comporter l'une ou plusieurs des caractéristiques suivantes, à savoir que le premier support mobile est solidarisé au moyen de basculement par un moyen de fixation de type rivet sécable de sorte qu'en fonctionnement normal du pédalier le support destiné à la mise au plancher de la pédale de freinage est rendu immobile sur les flasques fixes, ou à savoir que les axes de rotation des premier et second supports mobiles, respectivement destinés à la mise au plancher des pédales de freinage et de débrayage, sont disposés proche des moyens de liaison disposés sur le corps des pédales, réduisant de la sorte les efforts transmis par le moyen de basculement des pédales sur les premier et second supports et/ou par la biellette de renvoi d'efforts sur le second support mobile lors d'un choc frontal du véhicule, les moyens de liaison coopérant avec une extrémité d'une tige et d'un flexible, lesquels étant destinés à relier mécaniquement les pédales aux moyens de freinage et de débrayage.

L'invention concerne également un véhicule automobile comportant un moyen de propulsion lié à un moyen de transmission et un moyen de freinage, le moyen de transmission ou de freinage coopérant avec une extrémité d'une tige ou d'un flexible, une autre extrémité de la tige ou du flexible étant destinée à coopérer avec des moyens de liaison disposés sur les pédales du pédalier de sorte que le conducteur du véhicule commande ledit moyen de freinage ou de débrayage par l'une des pédales du pédalier, le véhicule étant caractérisé en ce que le pédalier comporte l'une quelconque des caractéristiques précédemment citées.

D'autres particularités et avantages apparaîtront à la lecture de la description ci-après faite en référence aux figures dans lesquelles :
- la figure 1 est une vue en perspective, suivant un premier angle de vue, d'un pédalier selon l'invention, le pédalier permettant la mise au plancher des deux pédales en cas de choc frontal du véhicule,
- la figure 2 est une vue en perspective, suivant un second angle de vue, du pédalier de la figure 1,
- la figure 3 est une représentation graphique d'une pédale de frein appartenant au pédalier de la figure 1,
- la figure 4 est une représentation graphique d'une pédale de débrayage appartenant au pédalier de la figure 1.

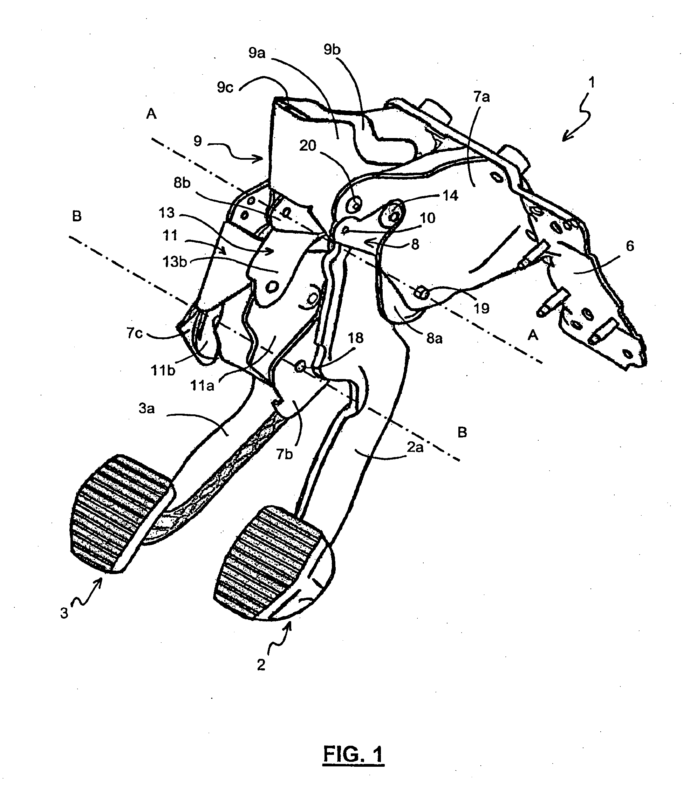

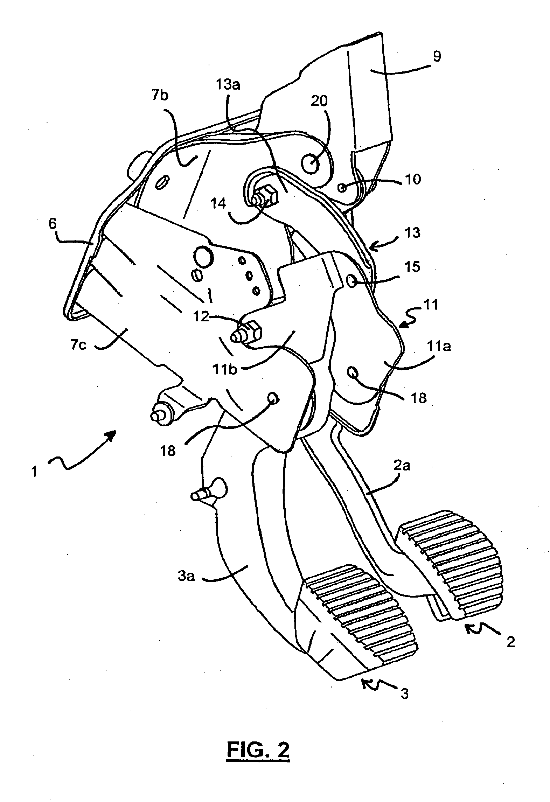

Comme représenté en figure 1 et 2, l'invention a essentiellement trait à un pédalier 1 de véhicule automobile pourvu d'au moins deux pédales, de préférence une pédale 2 de frein et une pédale 3 de débrayage destinée à la commande d'un moyen de transmission non représenté. Le pédalier comporte ainsi un dispositif de sécurité passive identifiable par un moyen 9 de basculement apte à commander une mise au plancher de la pédale 2.

Tel que représenté, le pédalier 1 comprend de préférence un support rigide principalement constitué d'une platine 6 destinée à être fixée sur une traverse du véhicule, à savoir le tablier avant (non représenté).

Selon un mode de réalisation préféré, donné à titre non limitatif, le support du pédalier 1 comprend également trois flasques 7a, 7b et 7c solidaires de la platine 6 et orientés sensiblement perpendiculairement de sorte à faire saillie hors de la platine. Les flasques 7a, 7b et 7c sont de préférence solidarisés à la platine 6 par un procédé d'assemblage connu, par exemple par soudage.

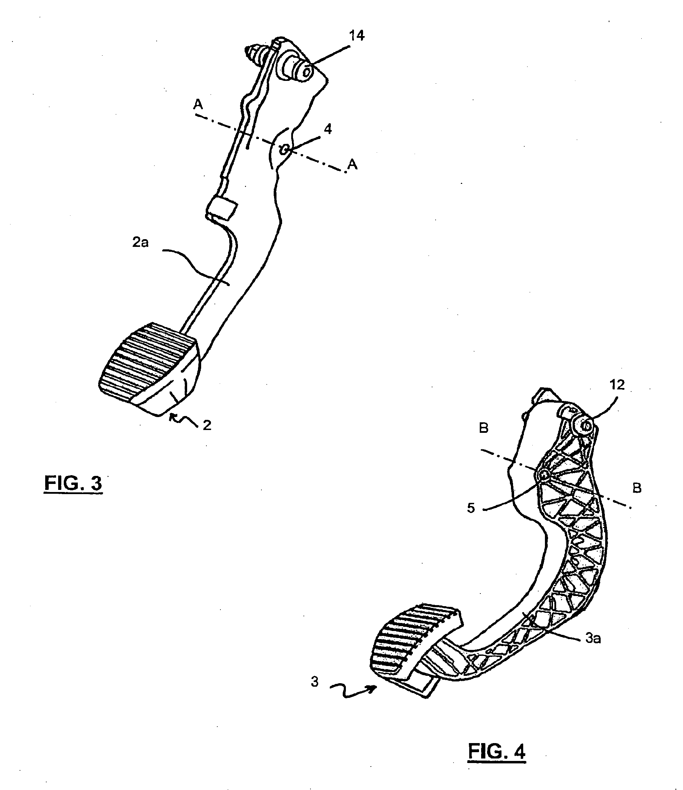

Les pédales 2 et 3 du pédalier 1 sont de préférence reliées aux moyens de freinage et de débrayage respectivement par une tige et un flexible (non représentés). Pour assurer la liaison, le corps 2a ou 3a de chacune des pédales 2 et 3 comprend un moyen 4 ou 5 de liaison (Cf. fig. 3 et 4).

Ainsi une extrémité d'une tige d'un amplificateur de freinage (non représenté) est liée à une ouverture présente sur le corps 2a de la pédale 2, l'ouverture étant le moyen 4 de liaison. De même, une extrémité d'un flexible (non représenté) destiné à la commande du débrayage d'une transmission est liée à une ouverture présente sur le corps 3a de la pédale 3 de débrayage, l'ouverture étant le moyen 5 de liaison entre le flexible et la pédale.

Concernant le dispositif de sécurité passive du pédalier 1, il se constitue notamment du moyen 9 de basculement, lequel est conformé de sorte à coopèrer avec un premier support 8 mobile, sur lequel la pédale 2 de frein est apte à pivoter en fonctionnement normal d'utilisation. Le moyen 9 de basculement, qualifié ci-après de basculeur, est sensiblement de forme en U et comprend deux flasques 9a et 9b ainsi qu'une surface 9c d'appui destinée à coopérer avec une butée disposée sur un support d'une colonne de direction (non représenté) lors d'un choc frontal du véhicule. Le basculeur 9 est également conformé pour créer une surface d'appui, sensiblement de forme linéaire, destinée à coopérer avec le premier support 8 mobile décrit ci-après.

Afin de garantir la rotation du basculeur lors d'un choc, les flasques 9a et 9b comportent respectivement une ouverture dans laquelle est de préférence disposé un axe 20 de rotation. Ainsi, l'axe 20 de rotation est destiné à pivoter dans une ouverture présente sur les flasques 7a et 7b fixes de sorte à rendre apte la rotation du basculeur 9 lors d'un choc frontal, la rotation du basculeur 9 s'effectuant dans un plan sensiblement longitudinal au véhicule.

Dans le mode de réalisation représenté en figures 1 et 2, le support 8 est une pièce monobloc de section en U comprenant deux flasques 8a et 8b mobiles respectivement solidarisés aux flasques 7a et 7b fixes du support du pédalier 1. Pour assurer la liaison entre les flasques 7a et 7b fixes et les flasques 8a et 8b mobiles, le support 8 comprend un axe 19 de rotation faisant saillie hors des flasques 8a et 8b. L'axe 19 de rotation du support 8 mobile est alors apte à pivoter dans une ouverture prévue à cet effet et disposée sur les flasques 7a, 7b fixes.

Le support 8 comprend également une première ouverture 17 disposée dans les flasques 8a et 8b et destinée à coopérer avec un axe 14 de rotation. L'axe 14 de rotation est l'axe autour duquel pivote la pédale 2 dans une condition normale d'utilisation.

Le support 8 comprend également sur chacune des flasques 8a et 8b une seconde ouverture destinée à coopérer avec un moyen 10 de fixation décrit ci-après.

Le moyen 10 de fixation a de préférence pour fonction particulière l'immobilisation de l'ensemble composé du premier support 8 mobile et du basculeur 9 sur les flasques 7a et 7b fixes.

En effet, dans une utilisation normale de la pédale 2, celle-ci pivote autour de l'axe 14 de rotation. Pour cela, l'axe 14 doit être rendu immobile au pédalier 1. Cette immobilisation de l'axe 14 de rotation est effective par une immobilisation du premier support 8 sur les flasques 7a et 7b. Le moyen 10 de fixation a ainsi pour fonction l'immobilisation du support 8 sur la platine 6 du pédalier. Il se compose de préférence d'au moins un rivet sécable et est disposé dans les ouvertures prévues à cet effet et disposées sur le basculeur 9 et le support 8, les ouvertures étant alors sensiblement coaxiales.

L'axe 14 de rotation est dans ce mode de réalisation un élément rapporté, emmanché en force dans une ouverture présente dans le corps 2a de la pédale 2.

Cet agencement particulier a pour avantage de créer, lors d'un choc frontal du véhicule, la mise en contact du basculeur 9 avec la butée disposée sur le support de la colonne de direction. Compte tenu que le basculeur 9 est disposé entre les deux flasques 7a et 7b fixes, le choc rompt le moyen 10 de fixation de sorte à permettre le pivotement du basculeur 9 autour de l'axe 20 de rotation. Le mouvement de rotation du basculeur 9 engendre également le pivotement du support 8 mobile autour de l'axe 19 de rotation. Le basculeur 9 et le support 8 pivotent ainsi simultanément sur les flasques 7a et 7b suivant un plan sensiblement perpendiculaire à la platine 6. Le basculeur 9 est conformé de sorte que ces flasques 9a et 9b viennent en appui contre l'axe de rotation 14, afin que, lors d'un choc frontal, le pivotement du basculeur 9 engendre le déplacement de l'axe de rotation 14.

La pédale 2 liée au support 8 par l'axe 14 est alors mise au plancher, se positionnant de la sorte dans un état de non agressivité.

Selon l'invention, le support 8 mobile est lié à un second support 11 mobile de sorte à créer un déplacement en simultané des deux pédales 2 et 3 du pédalier 1.

En effet, le pédalier 1 comporte, selon l'invention, un second support 11 mobile dont la fonction est de guider la mise au plancher de la pédale 3 de débrayage. Pour ce faire, le support 11 mobile est lié au support 8 par un moyen 13 de renvoi d'efforts décrit ultérieurement.

Le support 11 est une pièce monobloc de forme sensiblement en U, comprenant au moins deux flasques 11a et 11b sensiblement parallèles aux flasques 7b et 7c, de sorte que le second support 11 mobile est disposé entre les flasques 7b et 7c fixes. Le support 11 comprend aussi un axe 18 de rotation débouchant hors des flasques 11a et 11b permettant un pivotement du support 11 sur les flasques 7b et 7c fixes, le pivotement s'effectuant alors suivant un plan perpendiculaire au tablier du véhicule. La simultanéité des pivotements des supports 8 et 11 est due à une liaison mécanique assurée par le moyen 13 de renvoi d'efforts.

Le moyen 13 de renvoi d'efforts (Cf. fig.2) est du type biellette de forme sensiblement en L, comprenant deux extrémités 13a et 13b. La biellette 13 est conformée de sorte que l'extrémité 13a comprend une ouverture destinée à coopérer avec l'axe de rotation 14 de la pédale 2, tandis que l'extrémité 13b comprend un axe 15 de rotation destiné à coopérer avec une ouverture disposée sur le flasque 11a du second support 11 mobile.

Le pivotement du second support 11 est rendu possible par la présence d'un axe 18 de rotation faisant saillie hors des flasques 11a et 11b. L'axe 18 de rotation coopére sensiblement avec une ouverture dédiée et disposée sur les flasques 7b et 7c fixes.

Le support 11 mobile comporte également des ouvertures coaxiales disposées sur les flasques 11a et 11b, dans lesquelles sont disposées un axe 12 dédié à la rotation de la pédale 3 en fonctionnement normal d'utilisation. Dans ce mode de fonctionnement du pédalier 1, le support 11 doit, comme le support 8, être rendu immobile sur la platine 6 du pédalier. Compte tenu de la présence du moyen 13 de renvoi d'efforts, l'immobilisation du premier support 8 engendre l'immobilisation du second support 11.

La partie du corps 3a de la pédale 3 (Cf. fig.4) comportant l'axe 12 de rotation est disposée entre les flasques 11a et 11b du support 11 mobile de sorte à rendre possible la rotation de la pédale 3 autour du support 11 en fonctionnement normal d'utilisation, le second support 11 mobile étant alors immobilisé au pédalier.

Lors d'un choc, les premier et second supports 8 et 11, le basculeur 9 et le moyen 13 de renvoi d'efforts rentrent en mouvement. En effet, le support 11 pivote sur les flasques 7b et 7c, autour de l'axe 18 précédemment décrit. Etant donné que le support 11 est lié à l'axe 12 de rotation de la pédale 3, et que le support 11 est rendu mobile en rotation sous l'influence du déplacement de la biellette 13, la pédale 3 est mise au plancher en simultané de la pédale 2.

En effet, les supports 8 et 11 mobiles, le basculeur 9, la biellette 13 et les flasques 7a, 7b et 7c fixes sont de préférence conformés pour que cinématiquement le déplacement angulaire du basculeur provoque la même amplitude de déplacement en rotation des deux pédales 2 et 3 entre une position de repos et une position de mise au plancher.

Selon un autre aspect de l'invention, il est remarquable que l'axe 19 de rotation du support 8 est sensiblement disposé coaxialement à l'axe A-A (Cf. fig.1 et 3) défini par le moyen 4 de liaison de la tige sur la pédale 2.

Cette particularité a pour conséquence de s'affranchir des contraintes liées au déplacement des pédales 2 et 3 lors d'un choc frontal. Elle a également pour avantage de réduire considérablement l'effort que doit transmettre le basculeur 9 sur le support 8 pour garantir un pivotement le plus optimal possible de la pédale 2 lors d'un choc.

Il en est de même en ce qui concerne l'axe B-B défini par le moyen 5 de fixation du flexible sur la pédale 3, l'axe B-B étant quasi coaxiale à l'axe 18 de rotation du support 11 sur les flasques 7b et 7c mobiles.

Selon un second mode de réalisation, chacun des supports 8 et 11 mobiles est respectivement composé de deux flasques distincts dont la solidarité est obtenue après montage complet du pédalier. Cette particularité a pour avantage de facilité le montage du pédalier tout en garantissant les fonctions précédemment décrites.

Dans ce second mode de réalisation, l'axe 12 de rotation et la pédale 3 est de préférence une pièce monobloc obtenue par un procédé de moulage par exemple, l'axe 12 étant alors en saillie hors des flancs du corps 3a de la pédale 3. Il en est de même en ce qui concerne l'agencement de l'axe 14 de rotation sur la pédale 2.

Ainsi, l'invention offre avantageusement un pédalier 1 à encombrement réduit mais présentant la particularité d'offrir un moyen 13 de renvoi d'efforts apte à permettre le basculement en simultané d'au moins deux pédales 2 et 3 en la présence d'un choc frontal du véhicule.

Suivant les modes de réalisation précédemment décrits, l'invention solutionne avantageusement le problème lié à une possible remontée d'une pédale dans l'habitacle du véhicule lors d'un choc. En effet, tout en maintenant la liaison entre l'actionneur et la pédale, la rotation de la pédale dans une position de non aggressivité s'effectue suivant un axe A-A ou B-B de rotation disposé au plus proche de l'axe d'accroche défini par un moyen d'accrochage 4 ou 5 de la pédale 2 ou 3 au moyen de liaison du type tige ou flexible. Ainsi, le mouvement lié au basculement des deux pédales est avantageusement contrôlé mécaniquement.

## Revendications

1. Pédalier (1) de véhicule automobile comprenant une pédale (2) de frein, une pédale (3) de débrayage, une platine (6) destinée à être fixée au tablier d'un véhicule, au moins trois flasques (7a, 7b, 7c) solidarisés à la platine (6) et faisant saillie hors de la platine, un moyen (9) de commande du basculement de la pédale destiné à la mise au plancher d'une pédale (2, 3) en cas de choc frontal du véhicule, et un premier support (8) mobile disposé entre deux des flasques (7a, 7b) et coopérant avec le moyen (9) de basculement de sorte à rendre mobile en rotation le premier support (8) mobile lors d'un choc, provoquant ainsi la mise au plancher de la pédale (2) de frein **caractérisé en ce qu**'il comporte un second support (11) mobile disposé entre deux flasques (7b, 7c) et relié à la pédale (3) de débrayage par un moyen (12) de rotation, le support (11) étant rendu mobile en rotation sur les flasques (7b, 7c) par un moyen (13) de renvoi d'efforts liant les supports (8, 11) mobiles de sorte à provoquer la mise au plancher de la pédale (3) de débrayage simultanément de la pédale (2) de frein.

2. Pédalier selon la revendication 1, **caractérisé en ce que** le moyen (13) de renvoi d'efforts est une biellette conformée sensiblement en forme de L et comprenant au moins deux extrémités (13a, 13b), chacune des extrémités (13a, 13b) coopérant avec un moyen (14, 15) de liaison afin de solidariser la biellette (13) aux supports (8, 11) mobiles.

3. Pédalier selon la revendication 2, **caractérisé en ce que** le moyen (14) de liaison est un axe de rotation destiné à coopérer avec une ouverture disposée à l'extrémité (13a) de la biellette (13), et avec une ouverture du support (8) mobile, les ouvertures étant alors coaxiales.

4. Pédalier selon la revendication 2, **caractérisé en ce que** le moyen (15) de liaison est un axe de rotation faisant saillie hors des flancs de la biellette (13), l'axe (15) de rotation étant destiné à coopérer avec le support (11) mobile.

5. Pédalier selon la revendication 3, **caractérisé en ce que** l'axe (14) de rotation est l'axe de rotation de la pédale (2) de frein pour commander, en fonctionnement normal du pédalier, un système de freinage associé, l'axe (14) de rotation et la pédale (2) de frein étant conformés de sorte à former une pièce monobloc.

6. Pédalier selon la revendication 4, **caractérisé en ce que** le support (11) mobile comprend une ouverture destinée à coopérer avec l'axe (15) de rotation de la biellette (13), l'ouverture étant de forme antagoniste à l'axe de rotation de la biellette.

7. Pédalier selon la revendication 1, **caractérisé en ce que** le support (8) mobile est solidarisé au moyen (9) de basculement par un moyen de fixation (10), de type rivet sécable, de sorte qu'en fonctionnement normal du pédalier le support (8) est rendu immobile sur les flasques (7a, 7b) fixes.

8. Pédalier selon l'une quelconque des revendications **caractérisé en ce que** le support (8, 11) mobile, dédié à la mise au plancher de la pédale (2, 3), comprend un axe (19, 18) de rotation permettant au support (8, 11) mobile de pivoter entre deux flasques (7a, 7b, 7c), l'axe (18, 19) de rotation étant différent de l'axe (15, 14) de rotation de la biellette (13).

9. Pédalier selon la revendication 8, **caractérisé en ce que** l'axe (19, 18) de rotation est disposé proche d'un moyen de liaison (4, 5) de sorte à réduire les efforts transmis par le moyen (9) de basculement de la pédale (2, 3) sur le support (8) et/ou par la biellette (13) sur le support (11) mobile lors d'un choc frontal du véhicule, les moyens de liaison (4, 5) coopérant avec une extrémité d'une tige et d'un flexible, lesquels étant destinés à relier mécaniquement la pédale (2, 3) aux moyens de freinage et de débrayage.

10. Véhicule automobile comportant un moyen de propulsion lié à un moyen de transmission et un moyen de freinage, le moyen de transmission ou de freinage coopérant avec une extrémité d'une tige ou d'un flexible, une autre extrémité de la tige ou du flexible étant destinée à coopérer avec un moyen de liaison (4, 5) disposé sur la pédale (2, 3) du pédalier de sorte que le conducteur du véhicule commande ledit moyen de freinage ou de débrayage par l'une des pédales (2, 3) du pédalier (1) , **caractérisé en ce que** le pédalier (1) est conforme à l'une quelconque des revendications précédentes.

## Claims

1. Motor vehicle pedal box (1) comprising a brake pedal (2), a clutch pedal (3), a plate (6) intended to be fixed to the bulkhead of a vehicle, at least three flanges (7a, 7b, 7c) connected to the plate (6) and projecting from the plate, a means (9) for controlling the tilting of the pedal, said means being intended to lower a pedal (2, 3) to the floor in the event of the vehicle being in a head-on impact, and a first movable support (8) disposed between two of the flanges (7a, 7b) and cooperating with the tilting means (9) such that the first movable support (8) is made to rotate during an impact, thus causing the brake pedal (2) to be lowered to the floor, **characterized in that** it comprises a second movable support (11) disposed between two flanges (7b, 7c) and linked to the clutch pedal (3) by a rotary means (12), the support (11) being made to rotate on the flanges (7b, 7c) by a force transfer means (13) linking the movable supports (8, 11) so as to cause the clutch pedal (3) to be lowered to the floor at the same time as the brake pedal (2).

2. Pedal box according to Claim 1, **characterized in that** the force transfer means (13) is a substantially L-shaped tie bar having at least two ends (13a, 13b) each cooperating with a linking means (14, 15) so as to connect the tie bar (13) to the movable supports (8, 11).

3. Pedal box according to Claim 2, **characterized in that** the linking means (14) is a rotary pin intended to cooperate with an opening provided at the end (13a) of the tie bar (13) and with an opening in the movable support (8), the openings thus being coaxial.

4. Pedal box according to Claim 2, **characterized in that** the linking means (15) is a rotary pin projecting from the edges of the tie bar (13), the rotary pin (15) being intended to cooperate with the movable support (11).

5. Pedal box according to Claim 3, **characterized in that** the rotary pin (14) is the rotary pin of the brake pedal (2) in order to control, in normal operation of the pedal box, an associated braking system, the rotary pin (14) and the brake pedal (2) being designed to form a one-part piece.

6. Pedal box according to Claim 4, **characterized in that** the movable support (11) has an opening intended to cooperate with the rotary pin (15) of the tie bar (13), the opening being shaped so as to oppose the rotary pin of the tie bar.

7. Pedal box according to Claim 1, **characterized in that** the movable support (8) is connected to the tilting means (9) by a fixing means (10) of the pop rivet type such that, in normal operation of the pedal box, the support (8) is unable to move on the fixed flanges (7a, 7b).

8. Pedal box according to any one of the preceding claims, **characterized in that** the movable support (8, 11) for lowering the pedal (2, 3) to the floor comprises a rotary pin (19, 18) that allows the movable support (8, 11) to pivot between two flanges (7a, 7b, 7c), the rotary pin (18, 19) being different from the rotary pin (15, 14) of the tie rod (13).

9. Pedal box according to Claim 8, **characterized in that** the rotary pin (19, 18) is disposed close to a linking means (4, 5) so as to reduce the forces transmitted by the means (9) for tilting the pedal (2, 3) on the support (8) and/or by the tie rod (13) on the movable support (11) during a head-on impact of the vehicle, the linking means (4, 5) cooperating with one end of a rod and of a flexible shaft, these being intended to mechanically link the pedal (2, 3) to the braking and clutch means.

10. Motor vehicle having a propulsion means linked to a transmission means and a braking means, the transmission or braking means cooperating with one end of a rod or of a flexible shaft, another end of the rod or flexible shaft being intended to cooperate with a linking means (4, 5) disposed on the pedal (2, 3) of the pedal box such that the driver of the vehicle controls said braking or clutch means by way of one of the pedals (2, 3) of the pedal box (1), **characterized in that** the pedal box (1) is in accordance with any one of the preceding claims.

## Patentansprüche

1. Pedalwerk (1) eines Kraftfahrzeugs, das ein Bremspedal (2), ein Kupplungspedal (3), eine Platte (6), die dazu bestimmt ist, an der Stirnwand eines Fahrzeugs befestigt zu werden, mindestens drei Flansche (7a, 7b, 7c), die fest mit der Platte (6) verbunden sind und aus der Platte vorstehen, eine Steuereinrichtung (9) zum Kippen des Pedals, die zum Absenken eines Pedals (2, 3) auf den Boden im Fall eines Frontalaufpralls des Fahrzeugs bestimmt ist, und einen ersten beweglichen Träger (8) aufweist, der zwischen zwei der Flansche (7a, 7b) angeordnet ist und mit der Kippeinrichtung (9) zusammenwirkt, um den ersten beweglichen Träger (8) im Fall eines Aufpralls drehbeweglich zu machen, wodurch das Absenken des Bremspedals (2) auf den Boden bewirkt wird, **dadurch gekennzeichnet, dass** es einen zweiten beweglichen Träger (11) aufweist, der zwischen zwei Flanschen (7b, 7c) angeordnet und mit dem Kupplungspedal (3) über eine Dreheinrichtung (12) verbunden ist, wobei der Träger (11) durch eine Kraftumlenkeinrichtung (13) auf den Flanschen (7b, 7c) drehbar gemacht wird, die die beweglichen Träger (8, 11) verbindet, um das Absenken des Kupplungspedals (3) auf den Boden gleichzeitig mit dem Bremspedal (2) zu bewirken.

2. Pedalwerk nach Anspruch 1, **dadurch gekennzeichnet, dass** die Kraftumlenkeinrichtung (13) ein im Wesentlichen L-förmiges Gestänge ist und mindestens zwei Enden (13a, 13b) aufweist, wobei jedes der Enden (13a, 13b) mit einer Verbindungseinrichtung (14, 15) zusammenwirkt, um das Gestänge (13) fest mit den beweglichen Trägern (8, 11) zu verbinden.

3. Pedalwerk nach Anspruch 2, **dadurch gekennzeichnet, dass** die Verbindungseinrichtung (14) eine Drehachse ist, die dazu bestimmt ist, mit einer am Ende (13a) des Gestänges (13) angeordneten Öffnung und mit einer Öffnung des beweglichen Trägers (8) zusammenzuwirken, wobei die Öffnungen dann koaxial sind.

4. Pedalwerk nach Anspruch 2, **dadurch gekennzeichnet, dass** die Verbindungseinrichtung (15) eine Drehachse ist, die aus Flanken des Gestänges (13) vorsteht, wobei die Drehachse (15) dazu bestimmt ist, mit dem beweglichen Träger (11) zusammenzuwirken.

5. Pedalwerk nach Anspruch 3, **dadurch gekennzeichnet, dass** die Drehachse (14) die Drehachse des Bremspedals (2) ist, um bei Normalbetrieb des Pedalwerks ein zugeordnetes Bremssystem zu steuern, wobei die Drehachse (14) und das Bremspedal (2) so gestaltet sind, dass sie ein einstückiges Bauteil bilden.

6. Pedalwerk nach Anspruch 4, **dadurch gekennzeichnet, dass** der bewegliche Träger (11) eine Öffnung aufweist, die dazu bestimmt ist, mit der Drehachse (15) des Gestänges (13) zusammenzuwirken, wobei die Öffnung eine Gegenform zur Drehachse des Gestänges hat.

7. Pedalwerk nach Anspruch 1, **dadurch gekennzeichnet, dass** der bewegliche Träger (8) durch eine Befestigungseinrichtung (10) vom Typ teilbarer Niet fest mit der Kippeinrichtung (9) verbunden ist, so dass bei Normalbetrieb des Pedalwerks der Träger (8) auf den ortsfesten Flanschen (7a, 7b) blockiert wird.

8. Pedalwerk nach einem der Ansprüche, **dadurch gekennzeichnet, dass** der bewegliche Träger (8, 11), der für das Absenken des Pedals (2, 3) auf den Boden bestimmt ist, eine Drehachse (19, 18) aufweist, die es dem beweglichen Träger (8, 11) ermöglicht, zwischen zwei Flanschen (7a, 7b, 7c} zu schwenken, wobei die Drehachse (18, 19) sich von der Drehachse (15, 14) des Gestänges (13) unterscheidet.

9. Pedalwerk nach Anspruch 8, **dadurch gekennzeichnet, dass** die Drehachse (19, 18) nahe einer Verbindungseinrichtung (4, 5) angeordnet ist, um die Kräfte zu reduzieren, die bei einem Frontalaufprall des Fahrzeugs von der Kippeinrichtung (9) des Pedals (2, 3) auf den Träger (8) und/oder von dem Gestänge (13) auf den beweglichen Träger (11) übertragen werden, wobei die Verbindungseinrichtungen (4, 5) mit einem Ende einer Stange und einem Schlauch zusammenwirken, die dazu bestimmt sind, das Pedal (2, 3) mechanisch mit den Brems- und Kupplungseinrichtungen zu verbinden.

10. Kraftfahrzeug, das eine mit einer Getriebeeinrichtung verbundene Antriebseinrichtung und eine Bremseinrichtung aufweist, wobei die Getriebe- oder Bremseinrichtung mit einem Ende einer Stange oder eines Schlauchs zusammenwirkt, während ein anderes Ende der Stange oder des Schlauchs dazu bestimmt ist, mit einer Verbindungseinrichtung (4, 5) zusammenzuwirken, die auf dem Pedal (2, 3) des Pedalwerks angeordnet ist, so dass der Fahrer des Fahrzeugs die Brems- oder Kupplungseinrichtung über eines der Pedale (2, 3) des Pedalwerks (1) steuert, **dadurch gekennzeichnet, dass** das Pedalwerk (1) einem der vorhergehenden Ansprüche entspricht.
